(19) **Europäisches Patentamt / European Patent Office / Office européen des brevets**

(11) **EP 2 802 906 B1**

(12) **FASCICULE DE BREVET EUROPEEN**

(45) Date de publication et mention de la délivrance du brevet:
**29.12.2021 Bulletin 2021/52**

(21) Numéro de dépôt: **13700639.1**

(22) Date de dépôt: **09.01.2013**

(51) Int Cl.:
***G01V 3/08*** *(2006.01)*

(86) Numéro de dépôt international:
**PCT/EP2013/050316**

(87) Numéro de publication internationale:
**WO 2013/104679 (18.07.2013 Gazette 2013/29)**

(54) **SYSTEME DE PROSPECTION ELECTROMAGNETIQUE DU SOL SOUS-MARIN**

ELEKTROMAGNETISCHES SYSTEM ZUR UNTERSUCHUNG DES MEERESBODENS

ELECTROMAGNETIC SYSTEM FOR EXPLORING THE SEABED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.01.2012 FR 1250221**

(43) Date de publication de la demande:
**19.11.2014 Bulletin 2014/47**

(73) Titulaires:
- **Université de Bretagne Occidentale (U.B.O.)**
  **29200 Brest (FR)**
- **Centre National de la Recherche Scientifique (C.N.R.S.)**
  **75016 Paris (FR)**

(72) Inventeurs:
- **D'EU, Jean-François**
  **F-29840 Lanildut (FR)**
- **TARITS, Pascal**
  **F-29840 Landunvez (FR)**
- **GASPARI, Fabien**
  **29460 Daoulas (FR)**

(74) Mandataire: **Novagraaf Technologies**
**12 place des Halles Saint Louis**
**56100 Lorient (FR)**

(56) Documents cités:
| | |
|---|---|
| **EP-A1- 0 573 704** | **US-A- 4 295 096** |
| **US-A- 5 357 202** | **US-A1- 2006 202 697** |
| **US-B2- 7 805 249** | |

EP 2 802 906 B1

**Description**

La présente invention concerne un système de prospection électromagnétique sous-marine permettant de recueillir des données représentatives de la structure électrique du sol sous-marin sur des profondeurs de pénétration de quelques centaines de mètres. Ce système est plus particulièrement utilisé pour recueillir des données de résistivité sur les premiers mètres ou premières dizaines de mètres du sol sous-marin.

Les documents US 2006/202697 A1, US 4 295 096 A et US 5 357 202 A décrivent des systèmes de prospection électromagnétique sous-marine.

Les techniques de prospection électromagnétique marines sont connues en recherche fondamentale et également pour la recherche d'hydrocarbures ou la recherche d'hydrates de gaz, comme décrit dans le document intitulé "A marine deep-towed DC resistivity survey in a methane hydrate area, Japan Sea" of T.N.Goto, T.Kasaya, H.Machiyama, R.Takagi, R.Matsumoto, Y.Okuda, M.Satoh, T.Watanabe, N.Seama, H.Mikada, Y.Sanada, M.Noshita, in Exploration Geophysics, 2008, 39, 52-59; Butsuri-Tansa, 2008, 61, 52-59; Mulli-Tamsa, 2008, 11, 52-59. Ces techniques consistent à mesurer les propriétés électriques des matériaux formant le sol sous-marin, c'est-à-dire leur propension à laisser ou non passer un courant électrique. En pratique, on injecte ou on induit des courants dans le milieu à analyser et on mesure en différents points de ce milieu les potentiels électriques ou les champs magnétiques résultant de l'excitation électrique ou électromagnétique provoquée par la circulation du courant dans ce milieu pour, après inversion des données, en déduire le profil de résistivité électrique du sol.

Les techniques de prospection électromagnétique sont couramment utilisées à terre. Elles ont ensuite été adaptées au domaine marin pour étudier la structure interne de la terre à des profondeurs comprises entre une dizaine et quelques centaines de kilomètres et pour la prospection pétrolière avec des profondeurs de l'ordre de quelques kilomètres. Cette adaptation au domaine marin pour des profondeurs au-delà du kilomètre a essentiellement consisté à utiliser des systèmes comportant des capteurs de mesure posés sur le fond marin, enregistrant le signal injecté ou induit généré par une source fixe ou tirée par un navire au dessus des capteurs. Lorsque la profondeur d'eau de mer est faible (inférieure à quelques mètres), les systèmes utilisés en mer sont généralement des dispositifs terrestres, ces derniers étant disposés à bord du navire de prospection, les moyens d'injection de courant et les moyens de mesure étant tractés en surface ou sur le fond marin.

Ces systèmes de prospection comprennent classiquement :

- un module d'injection de courant comprenant deux électrodes d'injection distantes l'une de l'autre pour injecter, dans le sol sous-marin ou dans le milieu marin à proximité de ce sol, un courant sous une tension prédéterminée et une unité de commande de l'injection,
- un module d'acquisition de données comprenant au moins deux capteurs de mesure pour mesurer des données électriques, généralement des potentiels électriques, en au moins deux points du sol sous-marin ou du milieu marin à proximité de ce sol, les données électriques mesurées résultant de la circulation du courant dans le sol sous-marin, et des moyens de stockage et/ou d'analyse desdites données électriques; et
- un module d'alimentation pour alimenter en énergie le module d'injection de courant.

Dans les systèmes marins destinés à l'exploration pour les hydrocarbures, le courant injecté dans le milieu marin est classiquement un courant alternatif basse fréquence ayant une amplitude crête à crête de l'ordre de quelques dizaines à quelques centaines d'ampères, ce courant étant injecté dans le sol sous une tension de l'ordre de quelques centaines de volts crête à crête. L'intensité de ce courant est relativement forte pour pouvoir atteindre des profondeurs kilométriques. Ce courant est fourni par le module d'alimentation qui est soit disposé à bord du navire, soit disposé dans un compartiment étanche de l'engin sous-marin, lequel module d'alimentation est alimenté par un générateur électrique présent à bord du navire en opération et délivrant une tension alternative de l'ordre du kilovolt. En pratique, le module d'alimentation est un convertisseur AC/AC chargé de convertir la haute tension produite par le générateur électrique en une tension plus faible. Il est très volumineux car il doit être capable de délivrer des puissances de plusieurs milliers de watts. Le système est donc lui aussi très volumineux et sa mise en œuvre nécessite donc généralement l'utilisation de navires de grande taille disposant d'une grande puissance électrique et, si une partie du système est déporté sur un engin sous-marin, de gros moyens pour la mise à l'eau de l'engin sous-marin et son tractage. Les électrodes d'injection sont généralement très longues et se présentent par exemple sous la forme d'un tube creux de plusieurs dizaines de mètres de long.

L'invention concerne un domaine technique autre que la prospection pétrolière ou la recherche d'hydrates de gaz. Elle concerne l'analyse des premiers mètres ou premières dizaines de mètres du sol sous-marin, appelés communément proche surface, et vise plus particulièrement à proposer un système de prospection électromagnétique permettant de recueillir des données électriques de la proche surface du sol sous-marin.

L'invention s'inscrit par ailleurs dans une démarche de réduction de la taille du système de prospection électromagnétique de manière à obtenir un système compact et léger qui puisse être employé par des navires de petite taille ne disposant pas nécessairement de grande puissance électrique.

Cependant, la précision de mesure des systèmes de prospection électromagnétique dépend en partie de l'intensité du courant injecté dans le milieu marin. En effet, le milieu marin étant très conducteur, les potentiels mesurés par le système sont très faibles. L'injection d'un courant élevé est donc nécessaire pour maintenir la qualité des données électriques mesurées. Il est donc préférable de ne pas diminuer l'intensité du courant injecté pour diminuer la puissance électrique à fournir.

Selon l'invention, pour diminuer le volume du système de prospection électromagnétique, il est proposé de diminuer la puissance électrique nécessaire à l'injection de courant en diminuant la tension sous laquelle le courant est injecté dans le milieu marin. L'injection étant effectuée dans de l'eau de mer, le courant injecté I est proportionnel à la tension U aux bornes des électrodes d'injection, par application de la loi d'ohm, R étant la résistance électrique globale du module d'injection du système. Pour un courant I donné, une diminution de la tension U peut donc être obtenue en diminuant la résistance électrique R du module d'injection.

Pour diminuer la puissance électrique nécessaire au module d'injection, on propose de diminuer la résistance électrique du module d'injection en augmentant la surface des électrodes d'injection qui est en contact avec le milieu marin tout en augmentant la compacité du système.

Plus particulièrement, il est proposé d'utiliser des électrodes d'injection ayant une surface de contact avec le milieu marin telle que la résistance électrique des électrodes d'injection soit inférieure à 0,5 ohms, de préférence inférieure à 0,2 ohms.

L'invention a donc pour objet un système de prospection électromagnétique d'un sol sous-marin situé sous un milieu marin selon la revendication 1.

Selon l'invention, la surface de contact de chacune des électrodes d'injection est supérieure ou égale à 0,5 m$^2$.

Selon l'invention, la surface de contact des deux électrodes est dimensionnée pour que la résistance électrique des électrodes d'injection soit inférieure à 0,5 ohm et de préférence inférieure à 0,2 ohm.

L'agencement multicouche ou en réseau de l'électrode permet d'obtenir une électrode d'injection compacte.

On entend par réseau conducteur un ensemble dans lequel un ou plusieurs éléments conducteurs est ou sont agencés dans un espace peu étendu.

Selon l'invention, chaque électrode d'injection est comprise à l'intérieur d'un volume dont la plus grande longueur est inférieure à 1,5 mètre.

Selon l'invention, la résistance des électrodes d'injection est réduite pour diminuer la tension sous laquelle le courant est injecté dans le milieu marin et diminuer la puissance électrique à fournir par le module d'alimentation. A cet effet, on utilise des électrodes d'injection ayant une surface de contact avec le milieu marin qui est relativement étendue, supérieure à 0,5 m$^2$ pour réduire la résistance électrique des électrodes d'injection en contact avec le milieu marin à environ 0,1 ohm.

Pour réduire encore la résistance globale du module d'injection de courant, on réduira également autant que possible, dans le module d'injection de courant, la taille et le nombre des câbles et le nombre de connecteurs et on utilisera des composants actifs peu résistifs. Selon un mode de réalisation particulier, on réduit ainsi la résistance électrique des câbles, des connecteurs et des composants actifs de l'unité de commande du module d'injection à environ 0,2 ohms.

Toutes ces dispositions peuvent permettre de réduire la résistance globale du module d'injection de courant à environ 0,3 ohms voire moins. Selon l'invention, un courant de l'ordre de 40A peut alors être injecté sous une tension réduite, par exemple 12V. La puissance électrique délivrée par le module d'alimentation est alors être réduite à environ 500 W.

Ce module d'alimentation, avantageusement disposé dans un engin sous-marin, peut être alimenté en énergie par un générateur de petite taille disposé à bord du navire de prospection délivrant par exemple une tension alternative usuelle comprise entre 100 et 230 V.

Selon l'invention, la tension sous laquelle le courant est injecté dans le milieu marin est inférieure ou égale à 60 volts. Cette tension est bien en deçà des tensions classiquement employées pour la prospection pétrolière. Pour cette valeur de tension, il est possible d'injecter dans le milieu marin un courant plus fort par exemple 200 A pour une résistance des électrodes d'injection de 0,1 ohm ou environ 85 A pour une résistance des électrodes d'injection de 0,5 ohm.

Selon l'invention, chaque électrode d'injection comporte une pluralité d'éléments conducteurs disposés les uns à côté des autres et reliés entre eux électriquement de manière à former un ensemble conducteur multicouche. Selon l'invention, les éléments conducteurs sont des plaques métalliques disposées sensiblement parallèlement les unes aux autres.

Selon un mode de réalisation, les éléments conducteurs sont perforés et comportent, au moins dans une portion centrale, une pluralité de trous traversant ladite plaque de manière à obtenir un système ouvert et de manière à ce que les lignes de courant s'étendant à partir des plaques disposées entre les deux plaques d'extrémité soient en contact avec un maximum de liquide du milieu marin. L'utilisation de grilles entre dans le cadre de ce mode de réalisation.

En variante, les éléments conducteurs sont fabriqués en tissu métallique ou en paille d'inox.

Selon un mode de réalisation, les électrodes d'injection sont réalisées dans un matériau conducteur de type laiton, cuivre, inox, graphite, titane ou platine. Elles sont éventuellement plaquées par un matériau inoxydable tel que de l'or.

Avantageusement, les électrodes d'injection sont réalisées dans un matériau conducteur poreux pour augmenter encore la surface de contact des électrodes sans augmenter leur volume ou leur poids.

Selon un autre mode de réalisation, chaque électrode d'injection comprend un élément conducteur en tissu métallique ou en matériau conducteur poreux.

Selon un mode de réalisation, les surfaces de contact des deux électrodes d'injection ont des superficies sensiblement identiques. En variante, elles peuvent être différentes.

Selon un mode de réalisation, le module d'alimentation est disposé dans un compartiment étanche d'un engin sous-marin tracté par un navire et apte à se déplacer dans le milieu marin à proximité du sol marin.

Selon un mode de réalisation, l'une des deux électrodes d'injection est montée sur ledit engin sous-marin et l'autre électrode d'injection est montée au bout d'une traîne tractée par ledit engin sous-marin. Le poids dans l'eau de la traîne est compensé par l'ajout de flottabilité.

Avantageusement, la superficie de la surface de contact de l'électrode d'injection montée sur l'engin sous-marin est inférieure à celle de l'autre électrode pour la rendre la plus compacte possible et augmenter la résolution de la prospection.

La traîne peut être instrumentée avec des capteurs d'attitude, un altimètre et des capteurs de pression pour connaître sa position relative par rapport à l'engin sous-marin qui peut lui aussi être équipé des mêmes capteurs.

Selon un mode de réalisation, les capteurs de mesure sont disposés le long d'un câble tracté par l'engin sous-marin.

L'invention sera mieux comprise, et d'autres buts, détails, caractéristiques et avantages apparaîtront plus clairement au cours de la description explicative détaillée qui va suivre, en se référant ci-dessus aux dessins annexés, lesquels représentent:

- la figure 1, une vue schématique d'ensemble montrant le système selon l'invention en condition de fonctionnement, ledit système comprenant un engin sous-marin ou poisson tracté par un navire et un câble portant des capteurs de mesure et tirant une traîne portant une électrode d'injection de courant;
- la figure 2, une vue agrandie d'un détail A de la figure 1 montrant plus particulièrement le poisson;
- la figure 3, une vue en perspective d'un poisson conforme à l'invention;
- la figure 4, une vue en coupe longitudinale du poisson de la figure 3;
- la figure 5, une vue de l'arrière du poisson de la figure 3;
- la figure 6, une vue en perspective de la traîne du système de la figure 1, et
- la figure 7 est une vue schématique d'une variante de réalisation de l'électrode d'injection du système de l'invention.

L'invention propose un système de prospection électromagnétique de dimensions réduites qui puisse être mis en œuvre par des navires de petite taille n'ayant pas de grande puissance électrique disponible. Pour cela, il comporte un module d'injection de courant ayant des pertes résistives très réduites permettant de diminuer la puissance électrique nécessaire pour l'injection de courant dans le milieu marin. Pour diminuer la résistance électrique globale R du module d'injection de courant, on agit à la fois sur la résistance $R_c$ des câbles conducteurs et connecteurs du module, la résistance $R_{el}$ des composants actifs du module et la résistance $R_{c2}$ des électrodes d'injection du module. La résistance R représente alors la somme des résistances $R_c$, $R_{el}$ et $R_{e2}$.

Pour diminuer la résistance $R_c$, on augmente le diamètre des câbles conducteurs et on réduit la taille des câbles autant que cela est possible. On diminue également le nombre de connecteurs et on utilise des connecteurs ayant des contacts de bonne qualité. Il est ainsi possible de réduire la résistance $R_c$ à une valeur de l'ordre de 0.1 Ohm pour une distance de 100 mètres entre les électrodes.

Pour diminuer la résistance $R_{el}$, on utilise des composants actifs (transistors) ayant une faible résistance électrique, de l'ordre de quelques milli-ohms. Il est ainsi possible de réduire également la résistance $R_{el}$ à une valeur inférieure à 0.1 Ohm.

Enfin, pour diminuer la résistance $R_{e2}$, on augmente la surface de contact des électrodes avec le milieu marin. En effet, la résistance $R_{e2}$ comprend la résistance électrique du matériau employé pour la fabrication de l'électrode et surtout la résistance de contact avec l'eau de mer. Cette dernière est la plus importante et c'est elle qu'il faut veiller à diminuer.

En effet, la résistance du module d'injection est généralement dominée par la résistance de la couche d'eau en contact avec les électrodes. La résistivité de l'eau de mer est de l'ordre de 0.3 Ohm.m, ce qui, quoique très faible par rapport aux matériaux terrestres usuels, est très élevée en comparaison de la résistivité du métal de l'électrode. C'est donc la surface de l'eau de mer en contact de l'électrode qui dimensionne la résistance des électrodes d'injection.

Ainsi, en augmentant la surface des électrodes en contact avec le milieu marin, on parvient à diminuer la résistance $R_{e2}$.

Ainsi, si l'on souhaite injecter un courant de 40 Ampères sous une tension de 12V, il faut que la résistance globale du module d'injection de courant soit de 0.3 Ohms. Si la résistance électrique $(R_c+R_{el})$ des câbles et des composants actifs du module d'injection de courant est égale à environ 0.2 Ohms, il faut une résistance $R_{e2}$ de l'ordre de 0,1 ohms pour que la résistance globale R du module d'injection de courant ne dépasse pas 0,3 ohms.

Nous allons détailler ci-après comment déterminer la surface de contact nécessaire pour obtenir une résistance $R_{e2}$ égale à 0,1 ohms. Le matériau employé pour les électrodes doit bien entendu être bon conducteur. L'électrolyse qui se produit au passage du courant continu ou alternatif à la surface des électrodes permet d'éliminer au moins en partie l'éventuelle couche d'oxyde qui viendrait se déposer sur la surface des électrodes. Le cuivre, le laiton, l'inox, le graphite ou bien des métaux plus coûteux tels que le titane, le platine, l'or ou l'argent peuvent être employés pour fabriquer les électrodes. Le calcul de la surface de contact des électrodes est décrit ci-après dans le cadre d'électrodes à symétrie sphérique. Cette forme permet un calcul relativement simple et des tests ont montré que ce calcul est valable pour des électrodes de formes différentes.

Pour ce calcul, on considère deux électrodes d'injection sphériques, notées E1 et E2, ayant un rayon r. Pour chacune de ces électrodes, la variation de potentiel $\Delta V$ est nulle, d'où

$$\Delta V = \frac{1}{r^2} \frac{d}{dr} \left( r^2 \frac{dV}{dr} \right) = 0 \quad \text{(Equation de Laplace)}$$

On a alors $\dfrac{dV}{dr} = -\dfrac{B}{r^2}$ ou B est une constante d'intégration.

Or si on considère les équations suivantes définissant le champ électrique $\vec{E}$, la densité de courant $\vec{j}$ et l'intensité de courant I

- 
$$\vec{E} = -\overrightarrow{\text{grad}}(V) = -\frac{dV}{dr} \vec{r}$$

- 
$$\vec{j} = \sigma \cdot \vec{E}$$

- 
$$I = \int \vec{j} \cdot \vec{dS} = 4\pi r^2 \left\| \vec{j} \right\|$$

On obtient alors : $V = \dfrac{I}{4\pi\sigma r}$

Si on désigne le potentiel de l'électrode E1 et le potentiel de l'électrode E2 respectivement par $V_1$ et $V_2$, on a la tension $U_e$ résultante de la résistance électrique $R_{e2}$ des électrodes qui est égale aux bornes des électrodes à

$$U_e = V_1 - V_2 = R_{e2} \cdot I \text{ avec } V_1 = \frac{I}{4\pi\sigma r} \text{ et } V_2 = \frac{I}{4\pi\sigma r}.$$

La résistance $R_{e2}$ est donc égale à

$$R = \frac{V_2 - V_1}{I} = \frac{1}{2\pi\sigma r}$$

La surface S des électrodes étant égale à $S = 4\pi r^2$, on a alors

$$S = \frac{1}{\pi \cdot \sigma^2 \cdot R_{e2}^2}$$

$$\sigma = \frac{1}{0,3 \text{ ohm.m}}$$

Soit $S = 2.86$ m$^2$ pour $R_{e2}=0,1$ ohm et

Une surface de contact d'environ 3 m$^2$ est donc requise pour atteindre les performances d'injection souhaitées, à savoir 40 A sous 12 volts.

Selon un autre exemple, pour un courant de 30A sous 12 volts, il faut une résistance globale R du module d'injection de 0,4 ohm. Si on conserve les valeurs $R_c=0,1$ ohm et $R_{el}= 0,1$ ohm, il faut $R_{e2} = 0,2$ ohm, soit une surface de contact S de l'ordre de 0,7 m$^2$.

Selon l'invention, cette importante surface de contact est obtenue en utilisant des électrodes se présentant sous la forme d'éléments conducteurs tels des plaques métalliques. Pour que le système reste compact, chaque électrode comprend avantageusement une pluralité d'éléments conducteurs disposés les uns à côté des autres et reliés entre eux électriquement. Selon l'invention, ces éléments sont de préférence perforés et comportent à cet effet de multiples trous pour que l'électrode soit un système ouvert et que les lignes de courant s'étendant à partir des plaques disposées entre les plaques d'extrémité soient en contact avec un maximum de liquide du milieu marin. Ces éléments peuvent également être réalisés en un matériau poreux ou sous forme de tissu métallique ou de grilles métalliques.

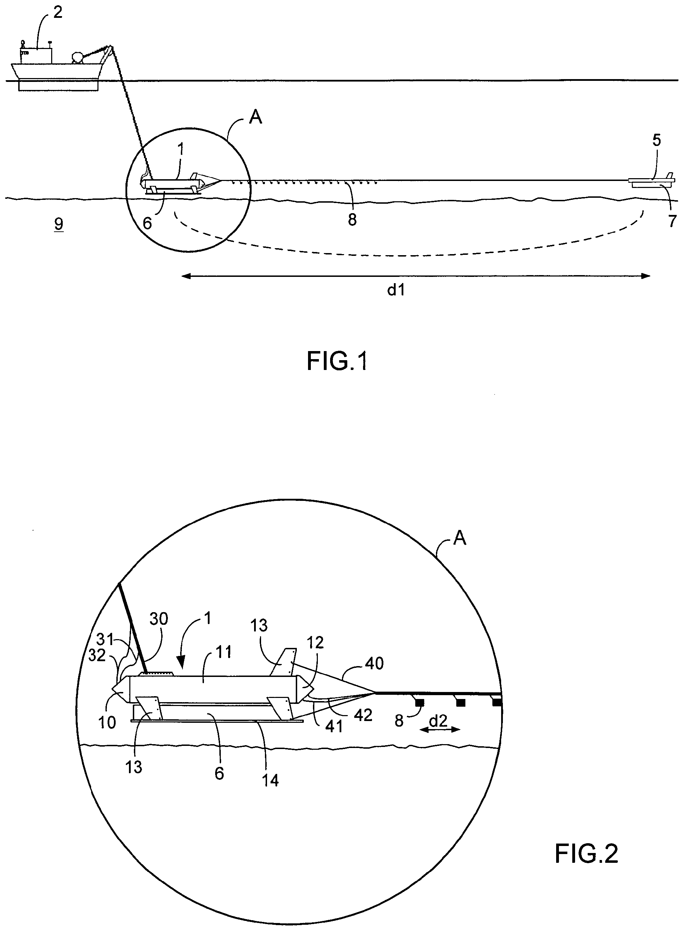

Les figures 1 à 6 illustrent un système de prospection électromagnétique conforme à l'invention.

En référence aux figures 1 et 2, le système de prospection électromagnétique selon l'invention comporte un engin sous-marin, appelé poisson 1, tracté par un navire 2 au moyen d'un câble 30. Un câble d'alimentation 31 pour alimenter en énergie le poisson et un câble de données 32 pour la transmission de données sont disposés le long du câble 30 ou à l'intérieur de ce dernier. Le poisson 1 est prolongé par un câble 40 destiné à tirer une traine 5 profilée pour la navigation sous-marine. Des électrodes d'injection de courant 6 et 7 sont disposées respectivement sur Le poisson 1 et la traîne 5 pour injecter un courant dans le milieu marin à proximité du sol sous-marin 9. L'électrode d'injection 6 est directement montée sur le poisson 1. L'électrode d'injection 7 disposée sur la traîne 5 est connectée au poisson via un câble de retour d'injection 41 disposé le long du câble 40.

Un câble de mesure 42 muni de capteurs de mesure 8 est connecté au poisson pour mesurer les potentiels électriques en différents points du milieu marin. Tout comme le câble 41, le câble 42 est disposé le long du câble 40. Ces câbles sont par exemple maintenus le long du câble 40 au moyen d'une chaussette. La longueur du câble 41, qui correspond sensiblement à la distance d1 entre les deux électrodes d'injection 6 et 7, définit la profondeur d'investigation du système alors que la distance d2 entre les capteurs de mesure 8 du câble 42 définit la résolution latérale et la résolution en profondeur du système.

L'électrode 7 étant ici très éloignée de l'électrode 6 et des capteurs de mesure 8, elle est considérée comme une électrode de masse disposée à l'infini. Le système est donc de type pôle - dipôle bien connu de l'homme du métier. Tous les autres types de dispositifs d'organisation relative des capteurs et du dispositif d'injection les uns par rapport aux autres sont également possibles sans restriction et entrent dans le cadre de l'invention.

En référence aux figures 2 à 5, le poisson 1 se présente sous la forme d'un tube cylindrique 11 muni d'une tête 10 et d'une queue 12 toutes deux en forme d'ogive. Le tube cylindrique 10 est muni de cinq ailettes 13, dont trois à l'arrière décalés angulairement d'environ 120° et deux à l'avant. Les deux ailettes avant sont disposées dans les plans longitudinaux des deux ailettes arrière présentes dans la partie inférieure du poisson.

Le câble 30 est fixé à l'avant du poisson et le câble 40 est fixé aux trois ailettes arrière du poisson.

L'électrode d'injection 6 est montée sur un support 14 fixé aux quatre ailes 13 disposées dans la partie inférieure du poisson. L'électrode 6 comprend une pluralité de plaques métalliques 60 sensiblement identiques montées sur le support 14. Ces plaques sont disposées verticalement et séparées les unes des autres par des entretoises 61. Les entretoises sont conductrices et réalisent la liaison électrique entre les plaques 60.

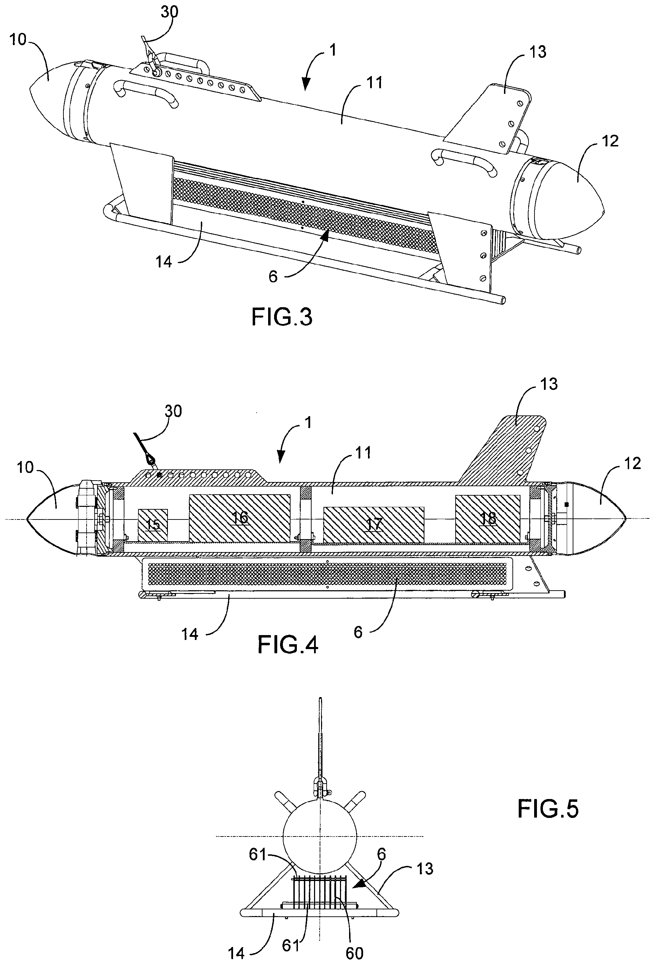

Comme montré plus particulièrement aux figures 3 et 4, les plaques 60 sont de préférence munies de trous 62 pour que les lignes de courant des plaques intermédiaires disposées entre les 2 plaques d'extrémité soient en contact avec un maximum de liquide du milieu marin. Ceci a pour avantage d'alléger le système sans diminuer énormément la surface de contact des plaques puisque de la surface de contact est récupérée au niveau de chaque trou dans l'épaisseur de la plaque.

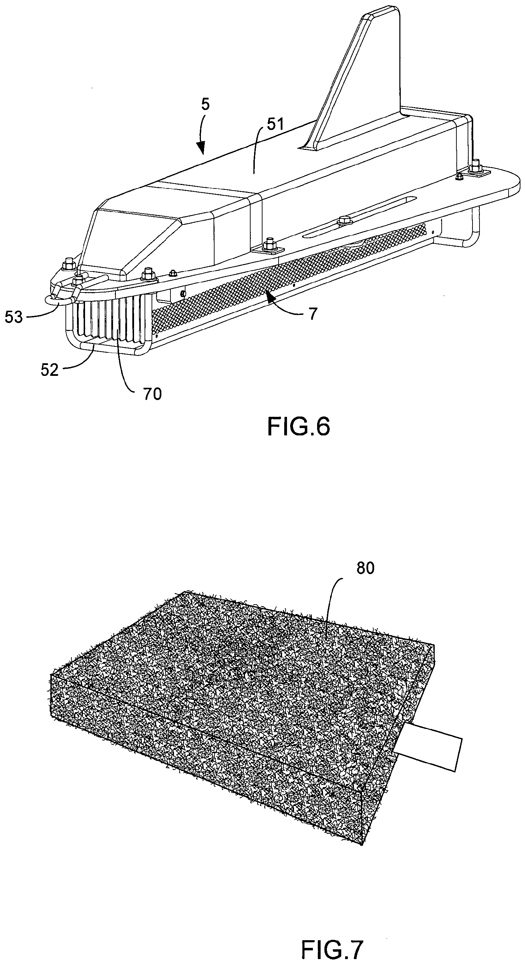

Selon une variante illustrée par la figure 7, chacune des électrodes d'injection 80 du système se présente sous la forme d'un tissu métallique réalisé à partir d'un ou plusieurs fils métalliques entremêlés, le ou lesdits fil(s) étant disposé(s) à l'intérieur d'un volume prédéfini. Dans cette figure, l'électrode 80 est de forme parallélépipédique. Une plaque métallique dont une extrémité est disposée à l'intérieur du parallélépipède est utilisée pour connecter le tissu à l'intérieur du parallélépipède au reste du module d'injection de courant.

Cette électrode est par exemple réalisée à partir d'un ou plusieurs fil (s) en inox tressé (s) pour former un parallélépipède. Bien entendu, d'autres formes d'électrodes peuvent être envisagées, par exemple une forme cylindrique. Des matériaux conducteurs autres que l'inox peuvent aussi être utilisés.

Dans l'exemple de la figure 7, l'électrode est réalisée à partir d'une pluralité de fils métalliques entremêlés. Le parallélépipède présente les dimensions suivantes: longueur = 0,4 m; largeur = 0,3 m et hauteur = 0,1 m. Il permet d'obtenir une surface de contact comprise entre 4 et 5 m$^2$.

Comme illustré schématiquement sur la figure 4, le poisson comporte, à l'intérieur du tube 11, un circuit de transmission de données 15, un module d'alimentation 16, un circuit d'acquisition de données 17 et un circuit d'injection de courant 18. Le circuit de transmission de données 15 est connectée d'une part au câble de transmission de données 32 provenant du navire et au circuit d'acquisition de données 17. Le module d'alimentation 16 est connecté au câble d'alimentation 31 provenant du navire. Le circuit d'acquisition de données 17 est connecté au câble de mesure 42 et forme avec celui-ci un module d'acquisition de données. De même, le circuit d'injection de courant 18 est connecté à l'électrode 6 et à l'électrode 7 via le câble de retour d'injection 41, lesquels éléments forment ensemble un module d'injection de courant. Le poisson est instrumenté pour se déplacer à proximité du sol sous-marin 9.

Les circuits 15, 17 et 18 sont alimentés en énergie par le module d'alimentation 16. Le module d'alimentation fournit notamment le courant d'injection au circuit d'injection de courant 18. Ce dernier comprend l'électronique de commutation (transistors) permettant de fournir le courant délivré par le module d'alimentation 16 au milieu marin via les électrodes 6 et 7. Le circuit d'acquisition de données 17 comprend l'électronique de commande des capteurs de mesure, des moyens de stockage des signaux mesurés, et éventuellement des moyens d'analyse ou de pré-analyse des signaux mesurés. Enfin, le circuit de transmission de données 15 transmet les signaux mesurés au navire.

La deuxième électrode d'injection 7 montée sur la traîne 5 est décrite en référence à la figure 6. La traîne 5, de forme profilée pour la navigation sous-marine, comprend un corps 51 en forme d'avion portant l'électrode d'injection 7. Le corps 51 est muni, à l'une de ses extrémités, d'un anneau 53 pour fixer le câble 42 à la traîne 5 Il est également équipé de moyens, tel qu'une enceinte remplie d'air ou de mousse, lui conférant une flottabilité nulle dans l'eau de mer. Par ailleurs, comme pour l'électrode 6, l'électrode 7 comprend une pluralité de plaques métalliques 70 sensiblement identiques. Les plaques sont fixées par leurs bords supérieurs au corps 51. Un arceau de protection 52 s'étendant vers le bas à partir du corps 51 est prévu pour protéger les plaques au cas où la traîne viendrait à toucher le sol ou un obstacle. Ces plaques sont disposées verticalement et séparées les unes des autres par des entretoises non représentées. La liaison électrique entre les plaques 70 est réalisée par les entretoises.

Dans le mode de réalisation présenté au figures 3 à 6, le système comporte dix-neuf capteurs de mesure 8 distants d'environ 1 mètre les uns des autres et la distance d1 entre les électrodes d'injection est d'environ 100 mètres. On obtient ainsi une profondeur d'investigation comprise entre 20 et 30 mètres. Le poisson mesure 1,50 m de long pour un diamètre de 20 cm. L'électrode 6 comporte 11 plaques 60 de 1 m x 0,1 m. La traîne 5 mesure 1,10 m de long et comporte 10 plaques 70 de 1 m x 0,1 m. Les plaques sont perforées dans leur partie centrale. On obtient alors une surface de contact totale de l'ordre de 2 à 3 m$^2$ permettant d'injecter un courant de 40 ampères sous 12 volts dans le milieu marin. Ceci a été confirmé par des tests effectués en mer.

Dans le système testé, le poisson est alimenté en 220 volts alternatif et le module d'alimentation 16 convertit la tension alternative en une tension continue et un courant continu de 40 A. Le générateur à bord du navire n'a donc besoin de fournir que du 220 volts alternatif et le module d'alimentation 16 est convertisseur AC/DC de petite taille.

La transmission de données peut éventuellement être réalisée par courant porteur de sorte que le câble 32 puisse être supprimé.

Dans ce mode de réalisation, l'électrode 7 est de préférence disposée entre l'électrode 6 et les capteurs de mesure 8.

Le module d'acquisition de données 17 peut avantageusement effectuer un premier traitement sur les données mesurées et notamment générer des valeurs de résistivité électriques du sol à partir des potentiels électriques mesurés.

Les applications de ce système sont multiples. Il peut être utilisé pour fournir des données électriques venant compléter les données géophysiques fournies par un autre système de prospection, par exemple un système de prospection acoustique. Il peut être aussi utilisé lorsque les systèmes de prospection acoustique sont inopérants, par exemple lorsque le sol est très réfléchissant ou en présence d'une poche de gaz dissous. Il peut également être utilisé pour la détection d'objets métalliques (fortement conducteurs) ou composites ou plastiques (fortement résistants) dans le sol, et plus particulièrement pour la détection et la localisation, notamment en profondeur, d'infrastructures comme des pipelines. Dans toutes ces applications, la tension sous laquelle le courant est injecté dans le milieu marin est inférieure à 60 volts pour conserver un module d'alimentation compact.

# EP 2 802 906 B1

## Revendications

1. Système de prospection électromagnétique d'un sol sous-marin situé sous un milieu marin, comprenant:

   - un module d'injection de courant comprenant deux électrodes conductrices (6,7) distantes l'une de l'autre, dites électrodes d'injection, aptes à injecter un courant sous une tension prédéterminée dans le milieu marin à proximité du sol sous-marin (9), lesdites électrodes d'injection présentant une surface de contact avec le milieu marin,
   - un module d'acquisition de données comprenant au moins deux capteurs de mesure (8) pour mesurer des données électriques ou magnétiques en au moins deux points du milieu marin à proximité du sol sous-marin, lesdites données résultant de la conduction ou de l'induction du courant dans le sol sous-marin,
   - un module d'alimentation (16) pour alimenter en énergie le module d'injection de courant,

   **caractérisé en ce que** chaque électrode d'injection comporte une pluralité d'éléments conducteurs distincts (60,70) disposés les uns à côté des autres et reliés entre eux électriquement de manière à former un réseau conducteur ou un ensemble conducteur multicouche, lesdits éléments conducteurs étant des plaques métalliques disposées sensiblement parallèlement les unes aux autres, **en ce que** la surface de contact de chacune des électrodes d'injection est supérieure ou égale à 0,5 m$^2$, **en ce que** la surface de contact des deux électrodes est dimensionnée pour que la résistance électrique des deux électrodes d'injection soit inférieure à 0,5 ohm, **en ce que** chaque électrode d'injection est comprise dans un volume dont la plus grande longueur est inférieure ou égale à 1,5 mètre, et **en ce que** la tension sous laquelle le courant est injecté dans le milieu marin est inférieure ou égale à 60 volts.

2. Système selon la revendication 1, **caractérisé en ce que** les éléments conducteurs (60, 70) sont perforés et comportent une pluralité de trous.

3. Système selon l'une quelconque des revendications précédentes, **caractérisé en ce que** les électrodes d'injection sont réalisées dans un matériau conducteur du type laiton, cuivre, inox, graphite, titane ou platine.

4. Système selon l'une quelconque des revendications précédentes, **caractérisé en ce que** les électrodes d'injection sont réalisées dans un matériau conducteur poreux.

5. Système selon l'une quelconque des revendications précédentes, **caractérisé en ce que** les surfaces de contact des deux électrodes d'injection ont des superficies sensiblement identiques.

6. Système selon l'une quelconque des revendications précédentes, **caractérisé en ce que** le module d'alimentation est disposé dans un compartiment étanche d'un engin sous-marin (1) tracté par un navire et apte à se déplacer dans le milieu marin à proximité du sol marin.

7. Système selon l'une quelconque des revendications précédentes, **caractérisé en ce que** l'une (6) des deux électrodes d'injection est montée sur ledit engin sous-marin et l'autre (7) électrode d'injection est montée au bout d'une traine (5) tractée par ledit engin sous-marin.

## Patentansprüche

1. Elektromagnetisches System zur Untersuchung eines Meeresbodens, der sich unter einer Meeresumgebung befindet, umfassend:

   - ein Strominjektionsmodul, umfassend zwei voneinander beabstandete leitfähige Elektroden (6, 7), genannt Injektionselektroden, die in der Lage sind, einen Strom mit einer vorbestimmten Spannung in die Meeresumgebung nahe dem Meeresboden (9) zu injizieren, wobei die Injektionselektroden über eine Kontaktfläche mit der Meeresumgebung verfügen,
   - ein Datenerfassungsmodul, umfassend mindestens zwei Messsensoren (8) zum Messen elektrischer oder magnetischer Daten an mindestens zwei Punkten der Meeresumgebung nahe dem Meeresboden, wobei die Daten aus der Leitung oder der Induktion von Strom in den Meeresboden resultieren,
   - ein Stromversorgungsmodul (16) zur Energieversorgung des Strominjektionsmoduls,

   **dadurch gekennzeichnet, dass** jede Injektionselektrode eine Vielzahl von getrennten leitfähigen Elementen (60, 70) umfasst, die nebeneinander angeordnet und elektrisch miteinander verbunden sind, um ein leitfähiges Netzwerk oder eine mehrschichtige leitfähige Baugruppe zu bilden, wobei die leitfähigen Elemente Metallplatten sind, die im Wesentlichen parallel zueinander angeordnet sind, dass die Kontaktfläche jeder der Injektionselektroden größer oder gleich 0,5 m$^2$ ist, dass die Kontaktfläche der beiden Elektroden so bemessen ist, dass der elektrische Widerstand der beiden Injektionselektroden kleiner als 0,5 Ohm ist, dass jede Injektionselektrode in einem Volumen enthalten ist, dessen größte Länge kleiner oder gleich 1,5 Meter ist, und dass die Spannung, mit der der Strom, der in die Meeresumgebung injiziert wird, kleiner oder gleich 60 Volt ist.

2. System nach Anspruch 1, **dadurch gekennzeichnet, dass** die leitfähigen Elemente (60, 70) perforiert sind und eine Vielzahl von Löchern aufweisen.

3. System nach einem der vorhergehenden Ansprüche, **dadurch gekennzeichnet, dass** die Injektionselektroden aus einem leitfähigen Material vom Typ Messing, Kupfer, Edelstahl, Graphit, Titan oder Platin bestehen.

4. System nach einem der vorhergehenden Ansprüche, **dadurch gekennzeichnet, dass** die Injektionselektroden aus einem porösen leitfähigen Material bestehen.

5. System nach einem der vorhergehenden Ansprüche, **dadurch gekennzeichnet, dass** die Kontaktflächen der beiden Injektionselektroden im Wesentlichen identische Oberflächen haben.

6. System nach einem der vorhergehenden Ansprüche, **dadurch gekennzeichnet, dass** das Stromversorgungsmodul in einem abgedichteten Abteil eines Unterwasserapparats (1) angeordnet ist, der von einem Schiff geschleppt wird und in der Lage ist, sich in der Meeresumgebung nahe dem Meeresboden zu bewegen.

7. System nach einem der vorhergehenden Ansprüche, **dadurch gekennzeichnet, dass** eine (6) der beiden Injektionselektroden am Unterwasserapparat montiert ist und die andere (7) Injektionselektrode am Ende eines Schleppseils (5), das vom Unterwasserapparat geschleppt wird, montiert ist.

**Claims**

1. Electromagnetic system for exploring a seabed located in a marine environment, comprising:

    - a current injection module comprising two conducting electrodes (6, 7) separated from one another, referred to as injection electrodes, able to inject a current at a predetermined voltage into the marine environment close to the seabed (9), said injection electrodes having a contact surface with the marine environment,
    - a data acquisition module comprising at least two measuring sensors (8) for measuring electrical or magnetic data at at least two points of the marine environment close to the seabed, said data resulting from the conducting or from the inducing of the current into the seabed,
    - a supply module (16) to supply power to the current injection module,

    **characterised in that** each injection electrode includes a plurality of separate conductive elements (60, 70) arranged next to one another and electrically connected to each other in such a way as to form a conductive network or a multilayer conductive assembly, said conductive elements being metal plates arranged substantially parallel to each other, **in that** the contact surface of each one of the injection electrodes is greater than or equal to 0.5 m$^2$, **in that** the contact surface of the two electrodes is dimensioned so that the electrical resistance of the two injection electrodes is less than 0.5 ohm, **in that** each injection electrode is comprised in a volume of which the greatest length is less than or equal to 1.5 metres, **in that** the voltage at which the current is injected into the marine environment is less than or equal to 60 volts.

2. System according to claim 1, **characterised in that** the conductive elements (60, 70) are perforated and include a plurality of holes.

3. System as claimed in any preceding claim, **characterised in that** the injection electrodes are made from a conductive material of the brass, copper, stainless steel, graphite, titanium or platinum type.

4. System as claimed in any preceding claim, **characterised in that** the injection electrodes are made from a porous conductive material.

5. System as claimed in any preceding claim, **characterised in that** the contact surfaces of the two injection electrodes have substantially identical surface areas.

6. System as claimed in any preceding claim, **characterised in that** the supply module is arranged in a sealed compartment of an undersea vehicle (1) towed by a vessel and able to be moved in the marine environment close to the seabed.

7. System as claimed in any preceding claim, **characterised in that** one (6) of the two injection electrodes is mounted on said undersea vehicle and the other injection electrode (7) is mounted at the end of a trawl (5) towed by said undersea vehicle.

FIG.1

FIG.2

FIG.3

FIG.4

FIG.5

FIG.6

FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006202697 A1
- US 4295096 A
- US 5357202 A

**Littérature non-brevet citée dans la description**

- **T.N.GOTO ; T.KASAYA ; H.MACHIYAMA ; R.TAKAGI ; R.MATSUMOTO ; Y.OKUDA ; M.SATOH ; T.WATANABE ; N.SEAMA ; H.MIKA-DA.** A marine deep-towed DC resistivity survey in a methane hydrate area, Japan Sea. *Exploration Geophysics,* 2008, vol. 39, 52-59
- *Butsuri-Tansa,* 2008, vol. 61, 52-59
- *Mulli-Tamsa,* 2008, vol. 11, 52-59